# EUROPEAN PATENT SPECIFICATION

(11) **EP 2 812 942 B1**
(45) Date of publication and mention of the grant of the patent: **28.03.2018**
(21) Application number: 13746970.6
(22) Date of filing: 23.01.2013
(51) Int. Cl.: H01M 10/42, H01M 2/20, H01M 2/10, H01M 10/48

(54) **POWER BATTERY PACK AND POWER BATTERY SYSTEM**
BATTERIEPACK UND BATTERIESYSTEM
BLOC-BATTERIE DE PUISSANCE ET SYSTÈME DE BATTERIE DE PUISSANCE

(30) Priority: 08.02.2012 CN 201220039768 U
(43) Date of publication of application: 17.12.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: WANG, Yun, Shenzhen Guangdong 518118 (CN); CHE, Guoyong, Shenzhen Guangdong 518118 (CN); ZHAN, Xuebin, Shenzhen Guangdong 518118 (CN)
(74) Representative: m patent group
(86) International application number: PCT/CN2013/070900
(87) International publication number: WO 2013/117132

(56) References cited:
- WO-A2-2007/102521
- CN-A- 101 714 649
- CN-U- 202 495 535
- CN-Y- 201 072 776
- JP-A- 2001 216 950
- JP-A- 2004 047 239
- US-A1- 2010 079 108
- US-A1- 2011 003 182

## Description

### FIELD

The present disclosure relates to a battery field, and more particularly to a power battery pack and a power battery system.

### BACKGROUND

With a continuous consumption of fuels and an increasingly serious environmental pollution, a power battery as a new energy has attracted much attention. At present, the power battery is primarily used in a new energy electric vehicle.

In order to make a distance of the electric vehicle travel longer, a capacity of the power battery needs to be increased. As a result, the number of battery cores in the power battery increases. A plurality of battery cores in the power battery are laminated or wound generally. As the capacity of the power battery increases, how to make a full use of the power battery to ensure a normal running of the electric vehicle has become a problem to be solved. At present, one electric vehicle is equipped with dozens of even hundreds of power batteries. In order to ensure an output voltage of these power batteries, the power batteries are connected in series by hard wires. Although this connection mode can provide a high output voltage, another serious problem lies in that if one of these series connected power batteries is short circuited or open circuited, it will cause an entire in-vehicle power battery circuit to work abnormally, thus causing the electric vehicle unable to run.

Document US 2011/0003182 A1 discloses a series-parallel battery system with a buffer resistor coupled to each junction of batteries or battery cells. Buffer resistors on the same row are coupled to a measurement node. Terminals of the battery system and the measurement nodes are treated as measurement points that are coupled to a conventional battery management unit. The buffer resistors provide a means for limiting in-rush current and a means for maintaining voltage balance across the row of batteries in the parallel columns of batteries. A control unit in series with each series of batteries monitors current in the series and comprises a switch to deactivate the column when the current exceeds a set of predetermined current levels.

### SUMMARY

The present invention is defined by the subject-matter of the appended claims. In order to solve at least one of the above problems, the present disclosure provides a power battery pack to solve the problem that a failure of one of series connected power batteries causes an entire in-vehicle power battery circuit to work abnormally.

According to one aspect of the present disclosure, a power battery pack is provided. The power battery pack comprises: four single batteries, wherein each single battery comprises two battery units, wherein a first battery unit in each single battery is connected with a first battery unit in an adjacent single battery in series to form a first loop, and a second battery unit in each single battery is connected with a second battery unit in an adjacent single battery in series to form a second loop, wherein each battery unit comprises two battery cores and each battery core has a positive electrode tap and a negative electrode tap; positive electrode taps of the battery cores in each battery unit are connected together and led out from the single battery to form a positive electrode of each battery unit; and negative electrode taps of the battery cores in each battery unit are connected together and led out from the single battery to form a negative electrode of each battery unit. According to another aspect of the present disclosure, a power battery system is provided. The power battery system comprises: a test switch assembly, comprising a plurality of test switches connected in parallel; and the power battery pack according to claim 1, wherein a first test switch is connected in series with the first loop of the power battery pack, and a second test switch is connected in series with the second loop of the power battery pack. In one embodiment, the test switch assembly further comprises two relay switches, two state collectors, and an information processing center, and a first relay switch is connected in series with the first loop, one end of the first state collector is connected with the first loop, and the other end of the first state collector is connected with the information processing center, and a second relay switch is connected in series with the second loop, one end of the second state collector is connected with the second loop, and the other end of the second state collector is connected with the information processing center. With the power battery pack according to embodiments of the present disclosure, by disposing the plurality of battery units in each single battery, and then connecting corresponding battery units in two adjacent single batteries in series, a plurality of single loops are formed in the battery pack. The single loops are connected in parallel to form an output loop for working normally under a normal condition. However, when a short circuit or open circuit occurring in some battery unit, a corresponding loop of a faulty battery unit will break down, but the other loops can still work normally. In this case, the power battery pack can also be used normally and the electric vehicle with the power battery pack can run normally. Accordingly, an efficiency of the power battery may be improved. In addition, with the power battery system according to embodiments of the present disclosure, by disposing the test switch assembly which comprises the plurality of test switches, each connected with one loop in the power battery pack in series respectively and then connected in parallel, it can be detected that whether respective loop in the power battery pack works normally, and a faulty loop can be disconnected in time to reduce a security risk.

### BRIEF DESCRIPTION OF THE DRAWINGS

These and other aspects and advantages of the invention will become apparent and more readily appreciated from the following descriptions taken in conjunction with the drawings in which:
Fig. 1 is a schematic diagram illustrating a power battery pack according to an embodiment of the present disclosure;
Fig. 2 is a schematic diagram illustrating a first single battery in the power battery pack in Fig. 1; and
Fig. 3 is a schematic diagram illustrating a power battery system and an electric vehicle system using the power battery system according to an embodiment of the present disclosure.

### DETAILED DESCRIPTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

It should be noted that, terms such as "the first", "the second" are only used to describe and should not be understood as the quality of the relatively important or implicitly indicated technology features. Thus, the features marked "the first", "the second" may explicitly or implicitly indicate one or more features included. In the description of the present disclosure, "multiple" means two or two more except for another illustration.

In the description of the present disclosure, it needs to understand, terms such as "fixed", "attached", "connected" should be understood generally, such as, the fixed connection, permanent connection or the connection in one body; also, the mechanism connection or the electric connection; the direct connection, indirect connection via a medium or the inner connection between two components. To any person skilled in the art, the specific meaning of the aforementioned words in the present disclosure may be understood according to the specific situation.

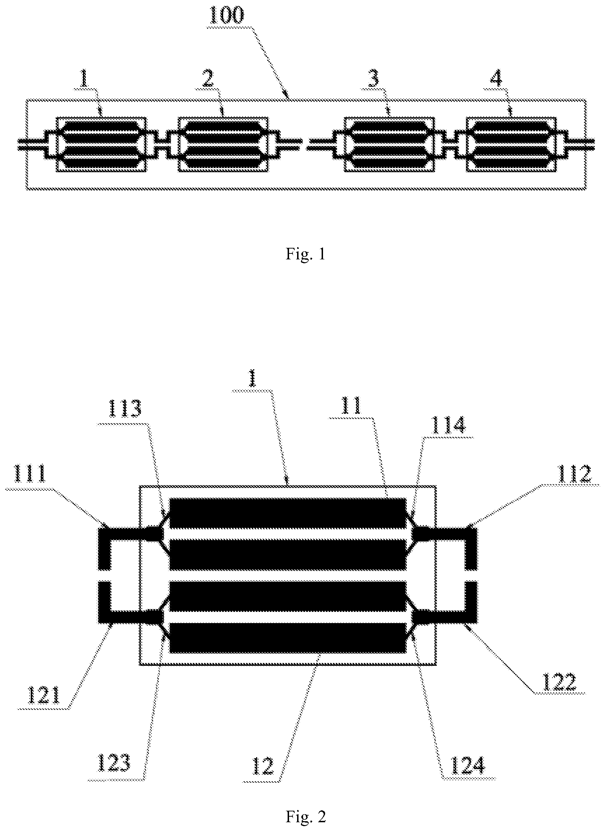

A power battery pack is provided according to an embodiment of the present disclosure. The power battery pack comprises: four single batteries, wherein each single battery comprises two battery units, wherein a first battery unit in each single battery is connected with a first battery unit in an adjacent single battery in series to form a first loop, and a second battery unit in each single battery is connected with a second battery unit in an adjacent single battery in series to form a second loop, wherein each battery unit comprises two battery cores and each battery core has a positive electrode tap and a negative electrode tap;positive electrode taps of the battery cores in each battery unit are connected together and led out from the single battery to form a positive electrode of each battery unit; and negative electrode taps of the battery cores in each battery unit are connected together and led out from the single battery to form a negative electrode of each battery unit. Fig. 1 is a schematic diagram of the power battery pack according to an embodiment of the present disclosure. As shown in Fig. 1, the power battery pack 100 comprises a first single battery 1, a second single battery 2, a third single battery 3 and a fourth single battery 4.

Fig. 2 is a schematic diagram of a first single battery in the power battery pack 100 in Fig. 1. As shown in Fig. 2, each single battery has an identical structure. Taking the first single battery 1 as an example, the first single battery 1 comprises two battery units: a first battery unit 11 and a second battery unit 12.

The first battery unit 11 in the first single battery 1 and the first battery unit in the second single battery 2 are connected in series, the first battery unit in the second single battery 21 and the first battery unit in the third single battery 3 are connected in series, and the first battery unit in the third single battery 3 and the first battery unit in the fourth single battery 4 are connected in series, that is, the first battery units in all the single batteries are connected in series to form a first loop.

The second battery unit 12 in the first single battery 1 and the second battery unit in the second single battery 2 are connected in series, the second battery unit in the second single battery 2 and the second battery unit in the third single battery 3 are connected in series, and the second battery unit in the third single battery 3 and the second battery unit in the fourth single battery 4 are connected in series, that is, the second battery units in all the single batteries are connected in series to form a second loop. In this embodiment, two single loops are formed in the power battery pack.

As shown in Fig. 2, the first battery unit 11 in the first single battery 1 has a positive electrode 111 and a negative electrode 112, and the second battery unit 12 in the first single battery 1 has a positive electrode 121 and a negative electrode 122.

A structure of the first loop is that: the positive electrode 111 of the first battery unit 11 in the first single battery 1 is connected to the negative electrode of the first battery unit in the second single battery 2, the positive electrode of the first battery unit in the second single battery 2 is connected to the negative electrode of the first battery unit in the third single battery 3, the positive electrode of the first battery unit in the third single battery 3 is connected to the negative electrode of the first battery unit in the fourth single battery 4, and then a current is led in from the positive electrode of the first battery unit in the fourth single battery 4 and led out from the negative electrode 112 of the first battery unit 11 in the first single battery 1 to form the first loop.

Or, the negative electrode 112 of the first battery unit 11 in the first single battery 1 is connected to the positive electrode of the first battery unit in the second single battery 2, the negative electrode of the first battery unit in the second single battery 2 is connected to the positive electrode of the first battery unit in the third single battery 3, the negative electrode of the first battery unit in the third single battery 3 is connected to the positive electrode of the first battery unit in fourth single battery 4, and then a current is led in from the positive electrode 111 of the first battery unit 11 in the first single battery 1 and led out from the negative electrode of the first battery unit in the fourth single battery 4 to form the first loop.

Similarly, a structure of the second loop is that: the positive electrode 121 of the second battery unit 12 in the first single battery 1 is connected to the negative electrode of the second battery unit in the second single battery 2, the positive electrode of the second battery unit in the second single battery 2 is connected to the negative electrode of the second battery unit in the third single battery 3, the positive electrode of the second battery unit in the third single battery 3 is connected to the negative electrode of the second battery unit in the fourth single battery 4, and then a current is led in from the positive electrode of the second battery unit in the fourth single battery 4 and led out from the negative electrode of the second battery unit 2 in the first single battery 1to form the second loop.

Or, the negative electrode 112 of the second battery unit 12 in the first single battery 1 is connected to the positive electrode of the second battery unit in the second single battery 2, the negative electrode of the second battery unit in the second single battery 2 is connected to the positive electrode of the second battery unit in the third single battery 3, the negative electrode of the second battery unit in the third single battery 3 is connected to the positive electrode of the second battery unit in the fourth single battery 4, and then a current is led in from the positive electrode 121 of the second battery unit 12 in the first single battery 1 and led out from the negative electrode of the second battery unit in the fourth single battery 4 to form the second loop.

A battery unit comprises 1 to 10 battery cores, each battery core has an anode tap and a negative electrode tap; all the anode taps of the battery cores are connected together to form a anode of the battery unit; and all the negative electrode taps of the battery cores are connected together to form a negative electrode of the battery unit.

As shown in Fig. 2, in the first single battery 1, both the first battery unit 11 and the second battery unit 12 comprise two battery cores, and each battery core comprises a positive tap and a negative electrode tap.

Positive electrode taps of the battery cores in each battery unit are connected together and led out from the single battery to form a positive electrode of each battery unit; and negative electrode taps of the battery cores in each battery unit are connected together and led out from the single battery to form a negative electrode of each battery unit.

Specifically, the positive electrode taps of the two battery cores of the first battery unit 11 in the first single battery 1 are connected together by a welding transition piece 113 and then led out from the first single battery 1 to form the positive electrode of the first battery unit 11. Similarly, the negative electrode taps of the two battery cores of the first battery unit 11 in the first single battery 1 are connected together by a welding transition piece 114 and then led out from the first single battery 1 to form the negative electrode of the first battery unit 11.

Similarly, the positive electrode taps of the two battery cores of the second battery unit 12 in the first single battery 1 are connected together by a welding transition piece 123 and then led out from the first single battery 1 to form the positive electrode of the second battery unit 12. Similarly, the negative electrode taps of the two battery cores of the second battery unit 12 in the first single battery 1 are connected together by a welding transition piece 124 and then led out from the first single battery 1 to form a negative electrode of the second battery unit 12.

It should be noted that, the battery core, the welding transition piece and battery tap mentioned in the present disclosure are known to those skilled in this field.

With the power battery pack according to embodiments of the present disclosure, by disposing the plurality of battery units in each single battery, and then connecting corresponding battery units in two adjacent single batteries in series, a plurality of single loops are formed in the battery pack. The single loops are connected in parallel to form an output loop for working normally under a normal condition. However, when a short circuit or open circuit fault occurring in some battery unit, a corresponding loop of a faulty battery unit will break down, but the other loops can still work normally. In this case, the power battery pack can also be used normally and the electric vehicle with the power battery pack still can run normally. Therefore, an efficiency of the power battery may be improved.

Compared with a power battery in the prior art, the power battery pack according to the present disclosure is safer and more reliable with higher efficiency. When a failure occurs to the power battery pack, it can reduce a risk of a break down of the electric vehicle.

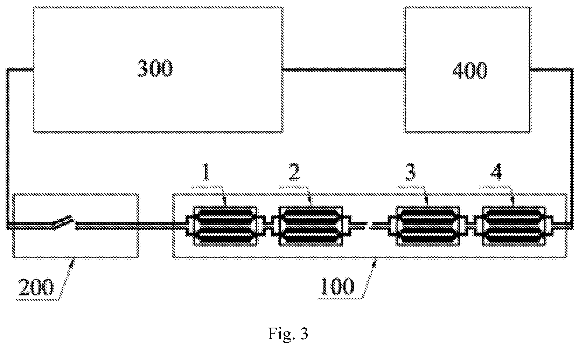

A power battery system is provided according to another aspect of the present disclosure. The power battery system comprises: a test switch assembly, comprising two test switches connected in parallel; wherein the power battery system further comprises the power battery pack provided by the first aspect of the present disclosure, wherein a first test switch is connected in series with the first loop of the power battery pack, and a second test switch is connected in series with the second loop of the power battery pack. The test switch assembly further comprises two relay switches, two state collectors, and an information processing center, and a first relay switch is connected in series with the first loop, one end of the first state collector is connected with the first loop, and the other end of the first state collector is connected with the information processing center, and a second relay switch is connected in series with the second loop, one end of the second state collector is connected with the second loop, and the other end of the second state collector is connected with the information processing center. Fig. 3 is a schematic diagram of the power battery system according to an embodiment of the present disclosure. As shown in Fig. 3, the power battery system comprises a test switch assembly 200 and the power battery pack 100.

In this embodiment, the test switch assembly 200 comprises two test switches (i.e., a first test switch and a second test switch) connected in parallel. The first test switch is connected with the first loop in the power battery pack 100 in series, and the second test switch is connected with the second loop in the power battery pack 100 in series. In this embodiment, the first test switch and the second test switch are identical.

In this embodiment, the test switch assembly further comprises two relay switches (i.e., a first relay switch and a second switch), two state collectors (i.e., a first state collector and a second state collector) and one processing center (all these components are not shown in Fig. 3). The first relay switch is connected with the first loop in series, one end of the first state collector is connected with the first loop, and the other end of the first collector is connected with the processing center. The second relay switch is connected with the second loop, one end of the second state collector is connected with the second loop, and the other end of the state collector is connected with the processing center.

In embodiments of the present disclosure, the relay switch, the state collector and the processing center are known to those skilled in this field. It should be noted that each state collector and the corresponding loop can be connected in series or in parallel, which is not specifically restricted by the present disclosure. Specifically, each state collector detects over voltage, an under voltage, an over current, a short circuit, a temperature or other fault, and then feeds back detected singles to the processing center. The processing center processes the detected singles from the state collector, and then sends a switch-off instruction to the corresponding relay switch to break the corresponding loop, while the other loops still work normally to ensure a normal usage of the power battery pack.

The power battery system may be further applied to an electric vehicle. Fig. 3 further shows an electric vehicle system using the power battery system. As shown in Fig. 3, the electric vehicle comprises an electric vehicle control system 300 and a drive motor 400. The power battery system and the drive motor 400 are connected in series by hard wires, and the power battery system and the vehicle control system 300 are connected in series by hard wires. Each loop in the power battery pack 100 can be detected in time by a security self-check function of the test switch assembly 200. For example, when a fault occurs to one first battery unit of some single battery, the first test switch detects the fault in time and breaks the first loop automatically, while the second loop keeps working with a half capacity of the power battery pack to ensure the normal running of the vehicle.

The power battery pack according to embodiments of the present disclosure can be applied to electric vehicles, energy storage power stations, mobile storage terminals, etc.

## Claims

1. A power battery pack (100), comprising four single batteries (1, 2, 3, 4),
**characterized in that**
each single battery (1, 2, 3, 4) comprises two battery units (11, 12),
wherein a first battery unit in each single battery (1, 2, 3, 4) is connected with a first battery unit in an adjacent single battery (1, 2, 3, 4) in series to form a first loop, and a second battery unit in each single battery (1, 2, 3, 4) is connected with a second battery unit in an adjacent single battery (1, 2, 3, 4) in series to form a second loop,
wherein each battery unit (11, 12) comprises two battery cores and each battery core has a positive electrode tap and a negative electrode tap;
positive electrode taps of the battery cores in each battery unit are connected together and led out from the single battery (1, 2, 3, 4) to form a positive electrode (111, 121) of each battery unit (11, 12); and
negative electrode taps of the battery cores in each battery unit are connected together and led out from the single battery (1, 2, 3, 4) to form a negative electrode (112, 122) of each battery unit (11, 12).

2. A power battery system, comprising a test switch assembly (200), comprising two test switches connected in parallel;
**characterized in that**
the power battery system further comprises the power battery pack (100) according to claim 1,
wherein a first test switch is connected in series with the first loop of the power battery pack (100), and a second test switch is connected in series with the second loop of the power battery pack (100).

3. The power battery system of claim 2, wherein
the test switch assembly (200) further comprises two relay switches, two state collectors, and an information processing center, and
a first relay switch is connected in series with the first loop, one end of the first state collector is connected with the first loop, and the other end of the first state collector is connected with the information processing center, and
a second relay switch is connected in series with the second loop, one end of the second state collector is connected with the second loop, and the other end of the second state collector is connected with the information processing center.

## Patentansprüche

1. Leistungsbatteriepack (100), der vier einzelne Batterien (1, 2, 3, 4) aufweist,
**dadurch gekennzeichnet, dass**
jede einzelne Batterie (1, 2, 3, 4) zwei Batterieeinheiten (11, 12) aufweist,
wobei eine erste Batterieeinheit in jeder einzelnen Batterie (1, 2, 3, 4) mit einer ersten Batterieeinheit in einer angrenzenden einzelnen Batterie (1, 2, 3, 4) in Serie verbunden ist, um eine erste Schleife zu bilden, und eine zweite Batterieeinheit in jeder einzelnen Batterie (1, 2, 3, 4) mit einer zweiten Batterieeinheit in einer angrenzenden einzelnen Batterie (1, 2, 3, 4) in Serie verbunden ist, um eine zweite Schleife zu bilden,
wobei jede Batterieeinheit (11, 12) zwei Batteriekerne aufweist und jeder Batteriekern eine positive Elektrodenverzweigung und eine negative Elektrodenverweigung aufweist;
wobei positive Elektrodenverzweigungen der Batteriekerne in jeder Batterieeinheit miteinander verbunden und herausgeführt aus der einzelnen Batterie (1, 2, 3, 4) sind, um eine positive Elektrode (111, 121) jeder Batterieeinheit (11, 12) zu bilden; und
negative Elektrodenverzweigungen der Batteriekerne in jeder Batterieeinheit miteinander verbunden und heraus aus der einzelnen Batterie (1, 2, 3, 4) geführt sind, um eine negative Elektrode (112, 122) jeder Batterieeinheit (11, 12) zu bilden.

2. Leistungsbatteriesystem, das eine Testschalteranordnung (200) aufweist, die zwei Testschalter aufweist, die parallel geschaltet sind;
**dadurch gekennzeichnet, dass**
das Leistungsbatteriesystem ferner den Leistungsbatteriepack (100) nach Anspruch 1 aufweist,
wobei ein erster Testschalter in Serie mit der ersten Schleife des Leistungsbatteriepacks (100) verbunden ist und ein zweiter Testschalter in Serie mit der zweiten Schleife des Leistungsbatteriepacks (100) verbunden ist.

3. Leistungsbatteriesystem nach Anspruch 2, wobei
die Testschalteranordnung (200) ferner zwei Relais-Schalter, zwei Zustandskollektoren und ein Informationsverarbeitungszentrum aufweist und
ein erster Relais-Schalter in Serie mit der ersten Schleife geschaltet ist, ein Ende des ersten Zustandskollektors mit der ersten Schleife verbunden ist und das andere Ende des ersten Zustandskollektors mit dem Informationsverarbeitungszentrum verbunden ist und
ein zweiter Relais-Schalter in Serie mit der zweiten Schleife geschaltet ist, ein Ende des zweiten Zustandskollektors mit der zweiten Schleife verbunden ist und das andere Ende des zweiten Zustandskollektors mit dem Informationsverabreitungszentrum verbunden ist.

## Revendications

1. Bloc de batteries d'alimentation (100), comportant quatre batteries individuelles (1, 2, 3, 4),
**caractérisé en ce que**
chaque batterie individuelle (1, 2, 3, 4) comporte deux unités de batterie (11, 12),
dans lequel une première unité de batterie dans chaque batterie individuelle (1, 2, 3, 4) est raccordée en série à une première unité de batterie dans une batterie individuelle (1, 2, 3, 4) adjacente pour former une première boucle, et une seconde unité de batterie dans chaque batterie individuelle (1, 2, 3, 4) est raccordée en série à une seconde unité de batterie dans une batterie individuelle (1, 2, 3, 4) adjacente pour former une seconde boucle,
dans lequel chaque unité de batterie (11, 12) comporte deux noyaux de batterie et chaque noyau de batterie a une prise d'électrode positive et une prise d'électrode négative ; des prises d'électrode positive des noyaux de batterie dans chaque unité de batterie sont raccordées ensemble et sortent de la batterie individuelle (1, 2, 3, 4) pour former une électrode positive (111, 121) de chaque unité de batterie (11, 12) ; et
des prises d'électrode négative des noyaux de batterie dans chaque unité de batterie sont raccordées ensemble et sortent de la batterie individuelle (1, 2, 3, 4) pour former une électrode négative (112, 122) de chaque unité de batterie (11, 12).

2. Système de batterie d'alimentation, comportant un ensemble de commutateurs de test (200), comportant deux commutateurs de test raccordés en parallèle ;
**caractérisé en ce que**
le système de batterie d'alimentation comporte en outre le bloc de batteries d'alimentation (100) selon la revendication 1,
dans lequel un premier commutateur de test est raccordé en série à la première boucle du bloc de batteries d'alimentation (100), et un second commutateur de test est raccordé en série à la seconde boucle du bloc de batteries d'alimentation (100).

3. Système de batterie d'alimentation selon la revendication 2, dans lequel
l'ensemble de commutateurs de test (200) comporte en outre deux commutateur à relais, deux collecteurs d'état et un centre de traitement de l'information, et
un premier commutateur à relais est raccordé en série à la première boucle, une extrémité du premier collecteur d'état est raccordée à la première boucle, et l'autre extrémité du premier collecteur d'état est raccordée au centre de traitement de l'information, et
un second commutateur à relais est raccordé en série à la seconde boucle, une extrémité du second collecteur d'état est raccordée à la seconde boucle, et l'autre extrémité du second collecteur d'état est raccordée au centre de traitement de l'information.
